# EUROPEAN PATENT APPLICATION

(11) **EP 3 056 872 A1**
(43) Date of publication of application: **17.08.2016**
(21) Application number: 14797421.6
(22) Date of filing: 10.01.2014
(51) Int. Cl.: G01F 1/56

(54) **METHOD FOR MEASURING THE FLOW RATE OF A LIQUID MEDIUM AND DEVICE FOR IMPLEMENTING SAME**

(30) Priority: 08.10.2013 RU 2013145142
(71) Applicant: Rassomagin, Vasiliy Radionovich, Perm, 614025 (RU)
(72) Inventor: Rassomagin, Vasiliy Radionovich, Perm, 614025 (RU)
(74) Representative: Jeck, Anton
(86) International application number: PCT/RU2014/000006
(87) International publication number: WO 2014/185815

(57) **Abstract**

Die Vorrichtung zur Durchflussmessung eines flüssigen Mediums enthält eine Rohrleitung aus einem dielektrischen Stoff, Dauermagneten, die an verschiedenen Seiten der Rohrleitung angeordnet sind, und einen Schwingungskreis, der aus einer Induktionsspule und einem Kondensator besteht, dessen Kondensatorbeläge beidseitig der Rohrleitung angeordnet sind. Im Schwingungskreis werden Resonanzschwingungen eines elektromagnetischen Felds erzeugt. Das flüssige Medium bewegt sich im Gleichmagnetfeld und wird unter der Wirkung der Lorenzkraft polarisiert. Dadurch ändern sich das elektrische Feld des Kondensators des Schwingungskreises, die Permittivität des flüssigen Mediums und die Dauer der ersten und der zweiten Halbperiode der Resonanzschwingungen des elektromagnetischen Felds des Schwingungskreises. Der Durchfluss des flüssigen Mediums wird anhand der Veranderung der jeweiligen Dauer der ersten oder der zweiten Halbperiode der Resonanzschwingungen des elektromagnetischen Felds des Schwingungskreises gemessen. Der technische Effekt ist die Erhöhung der Messgenauigkeit.

## Description

Die Erfindung bezieht sich auf die Messtechnik und kann zur Durchflussmessung von Wasser, Benzin, Dieselöl und Kerosin eingesetzt werden.

Aus dem Stand der Technik ist ein Verfahren zur Kraftstoffmessung (s. Schutzrechtsschrift RU 1835490 A1, IPC G 01 F 1/66) bekannt. Nach diesem Verfahren wird eine Kraftstoffpumpenmembran schrittweise bewegt. Anhand ihrer Endlagen wird der Kraftstoffverbrauch auf der Strecke zwischen dem Pumpeninnenraum ober-halb der Membran und der dielektrischen Druckleitung bewertet. Dabei wird die Druckleitung vorher mit dem Kraftstoff mit einem minimalen eingeschlossenen Gasanteil gefüllt. Danach werden elektromagnetische Schwingungen in der Druckleitung erzeugt und ein Bezugswert der Resonanzfrequenz erfasst. Während der schrittweisen Bewegung der Membran werden elektromagnetische Schwingungen im Pumpeninnenraum unterhalb der Membran und in der Druckleitung erzeugt. Die maximale Resonanzfrequenzdifferenz pro Membranbewegungszyklus und die aktuelle Resonanzfrequenz in der Druckleitung werden gemessen. Es wird die Differenz zwischen dem Bezugs- und dem aktuellen Wert der Resonanzfrequenzen in der Druckleitung ermittelt. Der Kraftstoffverbrauch wird anhand des Produkts aus diesen Differenzen ermittelt.

Nach dem o. g. Verfahren wird der Kraftstoffverbrauch nach dem Produkt aus den o. g. Differenzen der Resonanzfrequenzen bestimmt.

Bei der schrittweisen Bewegung der Kraftstoffpumpenmembran liegen mechanischer Verschleiß und Werkstoffermüdung der beweglichen Teile der Kraftstoffpumpe vor. Das beeinträchtigt die Messgenauigkeit des Verfahrens.

Der nächstliegende Stand der Technik und der Prototyp des vorgeschlagenen Verfahrens zur Durchflussmessung eines flüssigen Mediums ist das Verfahren zur Flussigkeits-Durchflussmessung in einer Rohrleitung (s. Patentschrift RU 2190833 C2, IPC G 01 F 1/58). Nach diesem Durchflussmessverfahren wird die mit der elektrischen Flüssigkeitsladung verbundene Magnetfeldstärke an einer beliebigen Stelle am Umfang, und zwar im Messquerschnitt der Rohrleitung ausgesondert und in ein elektrisches Verbrauchssignal mit Hilfe eines rohrumfassenden Stromwandlers umgewandelt.

Dabei ist die Messstrecke der Rohrleitung aus einem Kunststoff mit einer hohen triboelektrischen Fahigkeit gefertigt, wobei der veranderliche Innenquerschnitt der Messstrecke in Form von nacheinander geschalteten konvergierenden und divergierenden Kegeln ausgebildet ist. Die Messstrecke wird mit einem Metall-Erdableiter versehen, so dass ein hoher Polarisationsgrad der beweglichen Flüssigkeit sichergestellt ist.

Beim bekannten Verfahren zur Durchflussmessung wird der Durchfluss des flüssigen Mediums aufgrund der Veränderung der mit der elektrischen Flüssigkeitsladung verbundenen Magnetfeldstärke an einer beliebigen Stelle am Umfang des Messquerschnitts der Rohrleitung ermittelt. Dabei wird die Magnetfeldstärke in ein elektrisches Durchflusssignal mit Hilfe eines die Rohrleitung umfassenden Stromwandlers umgewandelt.

Beim Prototypverfahren ist die Messstrecke der Rohrleitung aus einem Kunststoff gefertigt, der eine niedrige Verschleißfestigkeit (Abriebfestigkeit) aufweist.

Daher kommt es beim Reiben der beweglichen Flüssigkeit an den Leitungswandungen zu einem mechanischen Verschleiß der Messstrecke, zum Abbau des Elektrisierungsgrads durch Reiben und zum Ladungsabbau der fließenden Flüssigkeit. Das vermindert die Messempfindlichkeit und -genauigkeit.

Aus dem Stand der Technik ist ein Polarisationsdurchflussmesser bekannt (s. Schutzrechtsschrift RU 1553831 A1, IPC G 01 F 1/56). Dieser Durchflussmesser dient zur technischen Umsetzung des bekannten Verfahrens.

Der genannte Polarisationsdurchflussmesser besteht aus einem dielektrischen Gehause, einem Deckel, einem Ein- und einem Auslasskanal, einem Strömungsteil, einer Arbeitselektrode, einer Messelektrode, einer Arbeitselektrode, einem Messgerät und einem Bolzen. Dabei ist das Messgerät zwischen der Messelektrode und einer gemeinsamen Busleitung mittels eines Bolzens verbunden. Die Arbeitselektrode ist mit der gemeinsamen Busleitung mittels eines Bolzens und die Arbeitselektrode ist mittels eines Bolzens mit einer Stromversorgung verbunden.

Die Funktionsweise des Prototyp-Polarisationsdurchflussmessers ist Folgende. Die dielektrische Flüssigkeit fließt in den Strömungsteil des Durchflussmessers über den Einlasskanal. Eine Hochspannung wird von der Stromversorgung an zwei Arbeitselektroden angelegt. Es entsteht ein elektrisches Feld in der Flüssigkeit. Unter seiner Kraftwirkung kommt die Polarisation des Flüssigkeitsdielektrikums (des nichtleitenden Körpers der Flüssigkeit) zustande.

Die Dichte der in der Flüssigkeit gebildeten gebundenen Ladungen verläuft proportional zur Speisespannung und zur Strömungsgeschwindigkeit. Somit ist das Signal des Messgeräts proportional zur Menge der Ladungen, die die Strömung abgetragen hat. Zugleich entspricht dieses Signal eindeutig dem Flüssigkeitsdurchfluss bei der Gleichspannung der Stromversorgung.

Der Polarisationsdurchflussmesser misst den Durchfluss der Flüssigkeit dadurch, dass die Dichte der gebundenen Ladungen, die während ihrer Polarisation durch das elektrische Feld in der Flüssigkeit entstehen, gemessen wird.

Um die Flüssigkeit zu polarisieren, ist eine Hochspannungs-Stromversorgung erforderlich. Aus diesem Grund ist der Polarisationsdurchflussmesser für die Durchflussmessungen von brennbaren Flüssigkeiten, z. B. Benzin, Dieselöl oder Kerosin, nicht geeignet. Das vermindert die Anwendbarkeit des Polarisationsdurchflussmessers. Darüber hinaus lässt die elektrische Sicherheit des Polarisationsdurchflussmessers nach.

Der nachstliegende Stand der Technik und der Prototyp der beanspruchten Vorrichtung zur Durchflussmessung eines flüssigen Mediums für die Umsetzung des vorgeschlagenen Verfahrens ist der Durchflussmesser für Flüssigkeiten und Gase (s. Schutzrechtsschrift RU 1296845 A1, IPC G 01 F 1/56).

Der Prototyp-Durchflussmesser enthält ein Gehäuse aus einem unmagnetischen Stoff, z. B. Glasfaserkunststoff, mit einem Kanal. An der Innenwand des Kanals ist eine ferromagnetische Federplatte fliegend befestigt. Das freie Ende der Federplatte ist mit einem Dauermagneten versehen. Am Gehäuse in Form eines Rohrabschnitts ist ein Elektromagnet so angebaut, dass die Federplatte sich innerhalb seines magnetischen Felds befindet. Die Elektromagnetspule wird von einem gesteuerten Sägezahngenerator über eine Schaltereinheit gespeist. Die Steuerschaltung für den Sagezahngenerator umfasst eine Stromversorgungseinheit, die über einen magnetgesteuerten Kontakt an einen Triggereingang angeschlossen ist.

Der magnetgesteuerte Kontakt ist auf dem Gehäuse des Durchflussmessers so angebracht, dass die über seine Kontakte durchlaufende Achse mit der Gehäuseachse gleichläuft. Der magnetgesteuerte Kontakt ist gegen die Wirkung des elektromagnetischen Felds durch eine Abschirmung abgeschirmt. Der Dauermagnet befindet sich auf der Federplatte gleichläufig mit der Achse des magnetgesteuerten Kontakts, und sein Nordpol ist zum Kanaleintritt ausgerichtet. Der Triggereingang ist mit der Stromversorgungseinheit mittels des magnetgesteuerten Kontakts verbunden. Der Trigger dient dazu, einen Rechteckspannungsimpuls zu bilden und das unnötige Ansprechen der Steuerschaltung beim "Prellen" der Kontakte des Elements zu vermeiden. Der Triggerausgang ist mit einem Eingang eines Differentiationskreises verbunden, der den Triggerimpuls verkürzt. Der Ausgang des Differentiationskreises ist mit dem Eingang einer monostabilen Kippstufe (Monoflop) verbunden. Diese dient dazu, einen Impuls mit genormter Amplitude und Dauer zu erzeugen. Dieser Impuls ist erforderlich, um die Schaltereinheit und den Sägezahngenerator stabil zu steuern. Die monostabile Kippstufe ist auch mit einem Frequenzmesser verbunden.

Die Funktionsweise des Prototyp-Durchflussmessers für Flüssigkeiten und Gase ist Folgende. Im Ausgangszustand liegt keine Strömungsbewegung vor. Dabei erzeugt der Sägezahngenerator eine variable Sägezahnspannung, die die Elektromagnetspule speist. Der Spulenstrom steigt bis auf einen maximalen Wert an und springt dann wieder auf null zurück. Eine solche Stromänderung ist nötig, damit die Federplatte mit dem Dauermagneten von ihrer Anfangsstellung bis zum Ansprechbereich des Elements sanft (stufenlos) ablenkt und auf ihre Anfangsstellung unter der Wirkung von eigenen elastischen Kraften bei der Spulenstromänderung auf Null zurückspringt. Infolge der Wirkung des elektromagnetischen Felds läuft die Federplatte mit dem Dauermagneten zum Element hin. Dabei bewegt sich der Dauermagnet normal zur Elementachse zum Element fortschreitend hin und überquert nur einen einzigen Bereich, in dem die Elementkontakte geschlossen sind. Sobald der Dauermagnet die Ansprechzone erreicht, schließen die Elementkontakte. Die Spannung der Stromversorgung gelangt zum Triggereingang, der einen Rechteckimpuls erzeugt. Da die monostabile Kippstufe während des Betriebs sich von dem Triggerkreis (Anlasskreis) nicht trennt, verkürzt der Differentiationskreis die Triggerimpulse, um den Einfluss des Triggerkreises (Anlasskreises) auf die Funktion der monostabilen Kippstufe zu vermindern. Dann gelangt der Impuls an die monostabile Kippstufe, die mit dem Frequenzmesser verbunden ist. Die monostabile Kippstufe erzeugt einen Rechteckimpuls, dessen Dauer dazu ausreicht, dass die Federplatte in ihre Anfangsstellung zurückkehrt. Der durch die monostabile Kippstufe erzeugte Impuls gelangt gleichzeitig an den Eingang des Sagezahngenerators, an den Frequenzmesser und zur Schaltereinheit. Dabei wird die Schaltereinheit fur eine Zeit geöffnet, die der Impulsdauer gleich ist. Dadurch wird der Stromkreis der Elektromagnetspule geöffnet. Unter der Wirkung von elastischen Kraften geht die Federplatte mit dem darauf befestigten Dauermagneten in die Anfangsstellung zurück. Der Impuls wirkt auf die Funktion des Generators so ein, dass der nächste Spannungsanstieg am Ausgang des Generators nach einer Zeit erfolgt, die der Impulsdauer der monostabilen Kippstufe gleich ist.

Wenn eine Flüssigkeits- oder Gasströmung vorliegt, erreicht die Federplatte mit dem Dauermagneten ihre maximale Ablenkung innerhalb einer größeren Zeitspanne dadurch, dass der Widerstand des beweglichen Mediums zunimmt. Das Ansprechen des Elements erfolgt zu einem späteren Zeitpunkt im Vergleich zum ersten Ansprechen, weil die Ansprechfrequenz des magnetgesteuerten Kontakts und folglich die Folgefrequenz der durch den Trigger erzeugten Rechteckimpulse sich geändert haben. Dabei ändert sich die Impulsfrequenz der monostabilen Kippstufe, die die Funktion der Schaltereinheit und die des Generators steuert. Die Schwingungsfrequenz der Ausgangsspannung des Generators ändert sich und fuhrt zur entsprechenden Veränderung der Spannungsfrequenz in der Spule.

Infolge der Elektromagnetfeldwirkung ändert sich die Schwingungsfrequenz der Federplatte. Somit ändert sich die Schwingungsfrequenz der Federplatte mit dem Dauermagneten je nach der Durchflussänderung der jeweiligen Flüssigkeit oder des jeweiligen Gases. Das geänderte Signal gelangt an die Steuerschaltung des Generators und wird durch den Frequenz-Durchflussmesser angezeigt.

Der Durchflussmesser fur Flüssigkeiten und Gase misst den Durchfluss dadurch, dass die Schwingungsfrequenz der Federplatte mit dem Dauermagneten verändert und durch den Frequenz-Durchflussmesser angezeigt wird.

Bei zahlreichen Schwingungen der Federplatte mit dem Dauermagneten ändern sich die elastischen Eigenschaften der Platte. Das vermindert die Messgenauigkeit bei der Durchflussmessung.

Die Federplatte mit dem Dauermagneten ist im Strömungsteil der Rohrleitung des Durchflussmessers für Flüssigkeiten und Gase eingebaut. Das vermindert die Messgenauigkeit und die Fertigungsgerechtheit.

### Offenbarung der Erfindung

Die Aufgabe der Erfindung ist die Entwicklung eines Verfahrens zur Durchflussmessung eines flüssigen Mediums und einer Vorrichtung hierfür. Das erfindungsgemäße Verfahren soll die Auswahl an technischen Mitteln zur Durchflussmessung der flüssigen Medien erweitern und die Messgenauigkeit steigern. Die erfindungsgemäße Vorrichtung soll der Durchführung des vorgeschlagenen Verfahrens dienen und eine höhere Messgenauigkeit sowie eine bessere Fertigungsgerechtigkeit sichern.

Die gestellte Aufgabe wird anhand der im Oberbegriff des Anspruchs 1 genannten sowie der kennzeichnenden Merkmale der Erfindung gelöst und zwar: Die gemeinsamen Merkmale des Prototypverfahrens und der Erfindung bestehen darin, dass beide ein Verfahren zur Durchflussmessung eines flüssigen Mediums offenbaren. Nach diesem Verfahren wird das flüssige Medium einwärts einer Rohrleitung aus einem dielektrischen Stoff geführt, in Bewegung gesetzt und polarisiert. Die kennzeichnenden Merkmale umfassen Folgendes: Resonanzschwingungen eines elektromagnetischen Felds werden in einem Schwingungskreis erzeugt. Der Schwingungskreis enthält eine Induktionsspule des Schwingungskreises und einen Kondensator des Schwingungskreises. Das flüssige Medium wird im magnetischen Feld bewegt und unter der Wirkung der Lorenzkraft polarisiert. Demzufolge werden das elektrische Feld des Kondensators des Schwingungskreises im flüssigen Medium, die Permittivität des flüssigen Mediums sowie die Dauer der ersten und der zweiten Halbperioden der Resonanzschwingungsperiode des elektromagnetischen Felds des Schwingungskreises geändert. Der Durchfluss des flüssigen Mediums wird dadurch gemessen, dass die Dauer der ersten oder der zweiten Halbperiode der Resonanzschwingungsperiode des elektromagnetischen Felds des Schwingungskreises verändert wird.

Der Anspruch 2 der Erfindung betrifft die Bewegungsbesonderheit des flüssigen Mediums in der Rohrleitung und zwar: Das flüssige Medium wird in einem Gleichmagnetfeld bewegt.

Der Anspruch 3 der Erfindung betrifft eine Sonderausführung der Rohrleitung und zwar: Die Rohrleitung wird vorteilhaft aus einem keramischen Stoff gefertigt, der eine hohe Abriebfestigkeit aufweist.

Der Anspruch 4 der Erfindung betrifft eine Besonderheit der Durchflussmessung eines flüssigen Mediums. Der Durchfluss wird dadurch gemessen, dass die Dauer der ersten oder der zweiten Halbperiode der Resonanzschwingungsperiode des elektromagnetischen Felds des Schwingungskreises verändert wird.

Gemaß dem vorgeschlagenen Verfahren kommt die Polarisation des flüssigen Mediums unter der Wirkung der Lorenzkraft während seiner Bewegung im Gleichmagnetfeld zustande. Demzufolge werden das elektrische Feld des Kondensators des Schwingungskreises im flüssigen Medium, die Permittivität des flüssigen Mediums sowie die Dauer der ersten und der zweiten Halbperioden der Resonanzschwingungsperiode des elektromagnetischen Felds des Schwingungskreises verandert.

Dabei wird der Durchfluss des flüssigen Mediums gemessen, indem die Dauer der ersten oder der zweiten Halbperiode der Resonanzschwingungsperiode des elektromagnetischen Felds des Schwingungskreises geändert wird. Dadurch wird die Auswahl an technischen Mitteln zur Durchflussmessung der flüssigen Medien erweitert.

Die Rohrleitung nach dem vorgeschlagenen Verfahren zur Durchflussmessung des flüssigen Mediums ist vorteilhaft aus einem keramischen Stoff gefertigt, der eine hohe Abriebfestigkeit aufweist.

Dadurch wird der mechanische Verschleiß der Rohrleitung während der Bewegung des flüssigen Mediums vermindert, wodurch die Messgenauigkeit erhöht wird.

Die gestellte Aufgabe wird anhand der Merkmale nach Anspruch 4 gelöst. Die gemeinsamen Merkmale der Prototypvorrichtung und der erfindungsgemäßen Vorrichtung zur Durchflussmessung des flüssigen Mediums sind wie folgt: Die Vorrichtung enthält das in einer Rohrleitung untergebrachte flüssige Medium, einen Magneten und eine Induktionsspule. Die wesentlichen kennzeichnenden Merkmale der beanspruchten Vorrichtung sind: Die Vorrichtung enthält einen Schwingungskreis, der eine Induktionsspule des Schwingungskreises und einen Kondensator des Schwingungskreises enthält. Dabei befindet sich das flüssige Medium in einer Rohrleitung zwischen den Polenden des Magneten sowie zwischen dem ersten und dem zweiten Kondensatorbelag des Schwingungskreises.

Der Anspruch 5 der Erfindung betrifft eine Besonderheit der Unterbringung des flüssigen Mediums in der Rohrleitung und zwar: Das flüssige Medium befindet sich in der Rohrleitung zwischen den Polenden des Dauermagneten.

Der Anspruch 6 der Erfindung betrifft eine Besonderheit der Ausbildung des Schwingungskreises und zwar: Der Schwingungskreis ist vom Messsystem galvanisch getrennt.

Die Konstruktion der Vorrichtung gemäß der Erfindung zur Durchflussmessung des flüssigen Mediums sieht eine Induktionsspule zum Nachpumpen von Energie zum Schwingungskreis und eine Induktionsspule vor, die die Frequenz der Resonanzschwingungen des Schwingungskreises abliest.

Dadurch ist der Schwingungskreis von der Messschaltung galvanisch getrennt, wodurch die Messgenauigkeit und die Empfindlichkeit der Vorrichtung gemäß der Erfindung erhöht werden.

Im Strömungsteil der Rohrleitung gibt es keine Elemente, die zur Konstruktion der vorgeschlagenen Vorrichtung zur Durchflussmessung des flüssigen Mediums gehören. Das erhöht die Messgenauigkeit und die Fertigungsgerechtigkeit.

Das flüssige Medium wird in der vorgeschlagenen Vorrichtung unter der Wirkung der Lorenzkraft polarisiert, die im flüssigen Medium dadurch induziert wird, dass es im Gleichmagnetfeld des Dauermagneten in Bewegung versetzt wird. Demzufolge ist keine Speisequelle erforderlich, um das flüssige Medium zu polarisieren. Das erhöht die Fertigungsgerechtigkeit der Vorrichtung fur die technische Umsetzung des vorgeschlagenen Verfahrens.

Die oben genannte Gesamtheit der wesentlichen Merkmale ermöglicht es, den gewünschten technischen Effekt zu erreichen, d. h. die Auswahl an technischen Mitteln zur Durchflussmessung der flüssigen Medien zu erweitern, die Messgenauigkeit zu erhöhen und die Fertigungsgerechtigkeit zu verbessern.

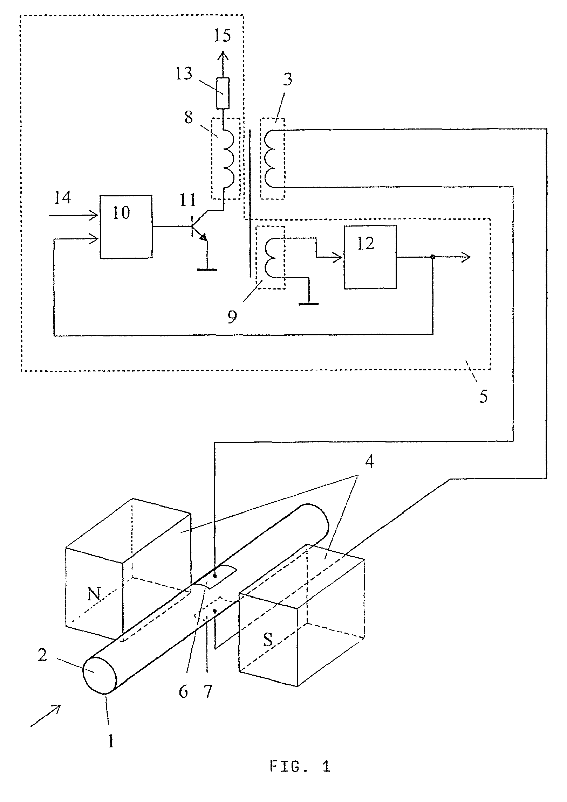

Das Strukturschaltbild der Vorrichtung zur Durchflussmessung des flüssigen Mediums ist in der beigefügten Figur dargestellt.

### Ausführung der Erfindung

Die Vorrichtung zur Durchflussmessung des flüssigen Mediums gemäß der Erfindung enthält ein flüssiges Medium 2, das innerhalb einer Rohrleitung 1 aus einem dielektrischen Stoff untergebracht ist (s. Figur), einen Dauermagneten 4, einen Schwingungskreis und eine Messschaltung 5.

Als flüssiges Medium 2 sind ein dielektrisches flüssiges Medium, z. B. Benzin, Dieselöl, Kerosin, oder ein schwachleitendes flüssiges Medium, z. B. Leitungswasser, geeignet.

Die Rohrleitung 1 ist vorteilhaft aus einem keramischen Stoff gefertigt, der eine hohe Abriebfestigkeit aufweist.

Die Rohrleitung 1 hat einen kreisförmigen Innenquerschnitt. Im allgemeinen Fall kann die Rohrleitung 1 einen rechteckigen Innenquerschnitt haben.

Beim Dauermagneten 4 handelt es sich vorteilhaft um einen Niob-Dauermagneten. Die Figur zeigt die Polenden (Nordpol N und Südpol S) des Dauermagneten 4.

Der Schwingungskreis enthält eine Induktionsspule 3 des Schwingungskreises und einen Kondensator des Schwingungskreises. Dabei befindet sich das flüssige Medium 2 in der Rohrleitung 1 zwischen den Polenden des Dauermagneten 4 sowie zwischen dem ersten Kondensatorbelag 6 und dem zweiten Kondensatorbelag 7 des Schwingungskreises.

Dabei liegt eine über die Mittelpunkte des ersten und des zweiten Kondensatorbelags 6, 7 des Schwingungskreises und die Achse der Rohrleitung 1 verlaufende Gerade senkrecht zu einer Geraden, die über die Mittelpunkte der Polenden des Dauermagneten 4 und die Achse der Rohrleitung 1 verläuft.

Der erste und der zweite Kondensatorbelag 6, 7 des Kondensators des Schwingungskreises ist an der Außenfläche der Rohrleitung 1 angeordnet. Im allgemeinen Fall können der erste und der zweite Kondensatorbelag 6, 7 an der Innenfläche der Rohrleitung 1 angeordnet sein.

Der erste Anschluss der Induktionsspule 3 des Schwingungskreises ist mit dem ersten Kondensatorbelag 6 des Schwingungskreises und der zweite Anschluss der Induktionsspule 3 des Schwingungskreises mit dem zweiten Kondensatorbelag 7 des Kondensators des Schwingungskreises verbunden.

Die Messschaltung 5 enthält eine Induktionsspule 8, um Energie in den Schwingungskreis nachzupumpen, eine Induktionsspule 9, um die Frequenz der Resonanzschwingungen des Schwingungskreises abzulesen, ein ODER-Element 10, einen Transistor 11, einen Komparator 12, einen Widerstand 13 und einen Rechner (nicht abgebildet).

Der zweite Eingang 14 des ODER-Elements 10 ist der Trigger-Eingang fur kontinuierliche ungedämpfte Resonanzschwingungen des elektromagnetischen Felds des Schwingungskreises. Der Ausgang des ODER-Elements 10 ist an die Transistorbasis (Basiselektrode) 11 angeschlossen. Der Emitter des Transistors ist mit dem Stromversorgungsanschluss "Allgemein" verbunden.

Der erste und der zweite Anschluss der Induktionsspule 8 zum Energienachpumpen werden jeweils mit einem Kollektor des Transistors 11 und mit dem ersten Anschluss des Widerstands 13 verbunden, dessen zweiter Anschluss mit dem Plus-Anschluss 15 der Stromversorgung der Messschaltung 5 verbunden ist.

Der erste und der zweite Anschluss der Induktionsspule 9 zum Ablesen der Frequenz der Resonanzschwingungen des Schwingungskreises werden jeweils mit dem Stromversorgungsanschluss "Allgemein" und mit dem direkten Eingang des Komparators 12 verbunden. An den invertierenden Eingang des Komparators wird eine Bezugsspannung angelegt. Der Ausgang des Komparators 12 wird mit dem ersten Eingang des ODER-Elements 10 und mit dem Rechner verbunden.

Die Induktionsspule 3 des Schwingungskreises kann in Form von zwei Spulenzweigen ausgebildet sein, die hintereinandergeschaltet, zugeschaltet und koaxial auf einem nichtleitenden Körper (in der Figur nicht abgebildet) angeordnet sind. Der nichtleitende Körper ist über der Rohrleitung 1 angeordnet.

Der erste Zweig der Induktionsspule 3 des Schwingungskreises ist in Form eines isolierten Kleindurchmesser-Drahts und einlagig ausgebildet. Der zweite Zweig der Induktionsspule 3 des Schwingungskreises ist in Form eines isolierten Kleindurchmesser-Drahts und mehrlagig ausgebildet und hat eine maximale Windungszahl. Dabei sind die Wicklungen des ersten und zweiten Zweigs der Induktionsspule 3 hintereinandergeschaltet. Dadurch hat die Induktionsspule 3 des Schwingungskreises ihre eigene minimale Wicklungskapazität und maximale Induktivität. Das erhöht die Empfindlichkeit der Vorrichtung.

Dabei hat die Dauer der ersten oder der zweiten, der positiven oder der negativen Halbperiode der Resonanzschwingungsperiode des elektromagnetischen Felds des Schwingungskreises einen maximalen Wert.

Die Wärmeausdehnungskoeffizienten des nichtleitenden Körpers des Drahts und der Drahtisolation der Induktionsspule 3 des Schwingungskreises können aufeinander abgestimmt sein und einen minimalen Wert aufweisen.

Die Induktionsspule 8 zum Nachpumpen der Energie in den Schwingungskreis und die Induktionsspule 9 zum Ablesen der Frequenz der Resonanzschwingungen des Schwingungskreises werden gefertigt, indem ein isolierter Draht oberhalb der Induktionsspule 3 des Schwingungskreises gewickelt wird.

Die Strömungsrichtung des flüssigen Mediums 2 ist in der Figur mit einem Pfeil gekennzeichnet.

Die Funktionsweise der Vorrichtung zur Durchflussmessung des flüssigen Mediums für die technische Umsetzung des vorgeschlagenen Verfahrens ist Folgende.

Das flüssige Medium 2 wird innerhalb der aus einem dielektrischen Stoff bestehenden Rohrleitung 1 untergebracht.

Nach dem Einschalten wird ein positiver Einheitsimpuls an den zweiten Eingang 14 des ODER-Elements 10 aus einem Parallelkanal der Messschaltung 5 angelegt. Vom Ausgang des ODER-Elements 10 gelangt der positive Impuls in die Transistorbasis des Transistors 11 und öffnet den Transistor.

Zu den Zeitpunkten der Stromänderungen in der Induktionsspule 8 werden EMK (elektromotorische Kräfte) in der Induktionsspule 3 des Schwingungskreises induziert, die im Schwingungskreis Resonanzschwingungen des elektromagnetischen Felds anfachen.

Die Frequenz der Resonanzschwingungen des elektromagnetischen Felds des Schwingungskreises wird von der Induktionsspule 9 abgelesen und an den Eingang des Komparators 12 übertragen. Die positiven Rechtecksignale gehen vom Ausgang des Komparators 12 an den Rechner der Messschaltung 5 und an den ersten Eingang des ODER-Elements 10.

Vom Ausgang des ODER-Elements 10 gehen die Rechteckimpulse an die Transistorbasis des Transistors 11. Beim Öffnen des Transistors 11 laufen solche Ströme über die Induktionsspule 8 zum Nachpumpen der Energie in den Schwingungskreis, bei deren Anderung die EMK in der Induktionsspule 3 des Schwingungskreises induziert werden.

Dabei wird die Energie in den Schwingungskreis innerhalb der ersten (oder positiven) Halbperioden der Schwingungen des elektromagnetischen Felds des Schwingungskreises nachgepumpt, d. h. während der Stromzunahme in der Induktionsspule 8. Innerhalb der zweiten (oder negativen) Halbperioden der Schwingungen des elektromagnetischen Felds des Schwingungskreises wird die Energie in den Schwingungskreis während der Stromabnahme nachgepumpt.

Da die Energie in den Schwingungskreis während der Stromänderungen in der Induktionsspule 8 übertragen wird (unter der Wirkung der EMK werden Ströme induziert, die mit der Stromrichtung im Schwingungskreis gleichsinnig sind), werden die Stromamplituden der Resonanzschwingungen des elektromagnetischen Felds des Schwingungskreises erhöht und die Frequenz der Resonanzschwingungen des elektromagnetischen Felds des Schwingungskreises ermittelt.

Somit werden im Schwingungskreis, der die Induktionsspule 3 des Schwingungskreises und den Kondensator des Schwingungskreises enthält, Resonanzschwingungen des elektromagnetischen Felds angefacht.

In der ersten (positiven) Halbperiode der Resonanzschwingungsperiode des elektromagnetischen Felds des Schwingungskreises ist der Kraftvektor des elektrischen Felds des Kondensators vom ersten Kondensatorbelag 6 zum zweiten Kondensatorbelag 7 des Kondensators des Schwingungskreises gerichtet (von oben nach unten).

In der zweiten (negativen) Halbperiode der Resonanzschwingungsperiode des elektromagnetischen Felds des Schwingungskreises ist der Kraftvektor des elektrischen Felds des Kondensators vom zweiten Kondensatorbelag 7 zum ersten Kondensatorbelag 6 des Kondensators des Schwingungskreises ausgerichtet.

Das flüssige Medium 2 wird im Gleichmagnetfeld des Dauermagneten 4 bewegt und unter der Wirkung der Lorenzkraft polarisiert.

Demzufolge werden das elektrische Feld des Kondensators des Schwingungskreises (das äußere elektrische Feld) im flüssigen Medium 2, die Permittivität des flüssigen Mediums 2 sowie die Dauer der ersten und der zweiten Halbperiode der Resonanzschwingungsperiode des elektromagnetischen Felds des Schwingungskreises verändert. Der Durchfluss des flüssigen Mediums 2 wird dadurch gemessen, dass die Dauer der ersten oder der zweiten Halbperiode der Resonanzschwingungsperiode des elektromagnetischen Felds des Schwingungskreises geändert wird.

Während der ersten Halbperiode der Resonanzschwingungsperiode des elektromagnetischen Felds des Schwingungskreises stimmen die Richtung der Lorenzkraft und die Richtung des Kraftvektors des elektrischen Felds des Kondensators des Schwingungskreises überein.

Während der zweiten Halbperiode der Resonanzschwingungsperiode des elektromagnetischen Felds des Schwingungskreises sind die Richtung der Lorenzkraft und die Richtung des Kraftvektors des elektrischen Felds des Kondensators des Schwingungskreises entgegengesetzt.

Wird die Strömungsgeschwindigkeit des flüssigen Mediums 2 erhöht, so steigt auch die Lorenzkraft im flüssigen Medium 2 an. Nimmt die Strömungsgeschwindigkeit des flüssigen Mediums 2 ab, so wird auch die Lorenzkraft im flüssigen Medium 2 kleiner.

Die Polarisation des flüssigen Mediums 2 kann durch die Polarisation der Moleküle, der freien geladenen Radikale, der positiv geladenen lonen und der negativen geladenen lonen zustandekommen.

Bei der Polarisation der Moleküle des flüssigen Mediums 2 entsteht ein Überschuss an gebundenen gleichsinnigen Ladungen in der feinen Oberflächenschicht des flüssigen Mediums 2, und die Oberflächendichte der gebundenen Ladungen ändert sich.

Bei der Polarisation der freien geladenen Radikale, der positiv geladenen lonen und der negativ geladenen lonen des flüssigen Mediums 2 werden die freien geladenen Radikale, die positiv geladenen lonen und die negativ geladenen lonen des flüssigen Mediums 2 in die Richtung und entgegengesetzt der Richtung der Lorenzkraft im flüssigen Medium 2 bewegt und aufgeteilt.

Dabei wird die Dichte der freien geladenen, gleichsinnigen Radikale, der positiv geladenen lonen und der negativ geladenen lonen im flüssigen Medium 2 geändert.

Die freien geladenen Radikale entstehen z. B. im Benzin während der magnetischen Behandlung des Benzins in einem starken Niob-Magnetfeld. Die positiv geladenen lonen und die negativ geladenen lonen gibt es z. B. im Leitungswasser.

Wird die Strömungsgeschwindigkeit des flüssigen Mediums 2 während der ersten Halbperiode der Resonanzschwingungsperiode des elektromagnetischen Felds des Schwingungskreises erhöht, so werden das elektrische Feld des Kondensators des Schwingungskreises im flüssigen Medium 2 abgeschwächt, die Permittivität des flüssigen Mediums 2 erhöht und die Dauer der ersten Halbperiode der Resonanzschwingungsperiode des elektromagnetischen Felds des Schwingungskreises vergrößert.

Dabei ist das resultierende elektrische (Gesamt)Feld der gebundenen Ladungen der Moleküle des flüssigen Mediums 2, der positiv geladenen lonen und der negativ geladenen lonen im allgemeinen Fall der Richtung des Kraftvektors des elektrischen Felds des Kondensators des Schwingungskreises im flüssigen Medium 2 entgegengesetzt.

Nimmt die Strömungsgeschwindigkeit des flüssigen Mediums 2 während der ersten Halbperiode der Resonanzschwingungsperiode des elektromagnetischen Felds des Schwingungskreises ab, so wird das elektrische Feld des Kondensators des Schwingungskreises im flüssigen Medium 2 verstärkt, die Permittivität des flüssigen Mediums 2 wird kleiner, und die Dauer der ersten Halbperiode der Resonanzschwingungsperiode des elektromagnetischen Felds des Schwingungskreises wird vermindert.

Nimmt die Strömungsgeschwindigkeit des flüssigen Mediums 2 während der zweiten Halbperiode der Resonanzschwingungsperiode des elektromagnetischen Felds des Schwingungskreises zu, so wird das elektrische Feld des Kondensators des Schwingungskreises im flüssigen Medium 2 verstärkt, und die Permittivität des flüssigen Mediums 2 und die Dauer der zweiten Halbperiode der Resonanzschwingungsperiode des elektromagnetischen Felds des Schwingungskreises werden kleiner.

Nimmt die Strömungsgeschwindigkeit des flüssigen Mediums 2 während der zweiten Halbperiode der Resonanzschwingungsperiode des elektromagnetischen Felds des Schwingungskreises ab, so wird das elektrische Feld des Kondensators des Schwingungskreises im flüssigen Medium 2 abgeschwächt, die Permittivität des flüssigen Mediums 2 wird erhöht und die Dauer der zweiten Halbperiode der Resonanzschwingungsperiode des elektromagnetischen Felds des Schwingungskreises wird größer.

Demzufolge werden die Dauer der ersten Halbperiode und die Dauer der zweiten Halbperiode der Resonanzschwingungsperiode des elektromagnetischen Felds des Schwingungskreises unterschiedlich sein.

### Gewerbliche Anwendbarkeit

Das vorgeschlagene Verfahren zur Durchflussmessung des flüssigen Mediums und die Vorrichtung hierfür sind in der Messtechnik und in zahlreichen Messgeraten breit anwendbar. Auch weitere Anwendungsfälle einschließlich der Automatisation von Durchflussmessungen flüssiger Medien werden dem Fachmann offensichtlich sein.

Die vorliegende Beschreibung und die einzelnen Beispiele sind als Informationen zur Veranschaulichung der Erfindung zu betrachten, deren Wesen und der Umfang des Patentanspruchs in den weiteren Patentanspruchen der Erfindung durch die Gesamtheit der wesentlichen Merkmale und ihre technischen Aquivalente definiert sind.

## Claims

1. Verfahren zur Durchflussmessung eines flüssigen Mediums, bei dem das flüssige Medium innerhalb einer aus einem dielektrischen Stoff bestehenden Rohrleitung untergebracht, bewegt und polarisiert wird,
**dadurch gekennzeichnet,**
**dass** in einem Schwingungskreis, der eine Induktionsspule des Schwingungskreises und einen Kondensator des Schwingungskreises enthält, Resonanzschwingungen eines elektromagnetischen Felds erzeugt werden,
**dass** das flüssige Medium im magnetischen Feld bewegt und unter der Wirkung der Lorenzkraft polarisiert wird,
**dass** demzufolge das elektrische Feld des Kondensators des Schwingungskreises im flüssigen Medium, die Permittivität des flüssigen Mediums sowie die Dauer der ersten und der zweiten Halbperiode der Resonanzschwingungsperiode des elektromagnetischen Felds des Schwingungskreises verändert werden und
**dass** der Durchfluss des flüssigen Mediums dadurch gemessen wird, dass die Dauer der ersten Halbperiode oder der zweiten Halbperiode der Resonanzschwingungsperiode des elektromagnetischen Felds des Schwingungskreises verändert wird.

2. Verfahren nach Anspruch 1,
**dadurch gekennzeichnet,**
**dass** das flüssige Medium in einem Gleichmagnetfeld bewegt wird.

3. Verfahren nach Anspruch 1,
**dadurch gekennzeichnet,**
**dass** die Rohrleitung vorteilhaft aus einem keramischen Stoff gefertigt ist, der eine hohe Abriebfestigkeit aufweist.

4. Verfahren nach Anspruch 1,
**dadurch gekennzeichnet,**
**dass** der Durchfluss des flüssigen Mediums dadurch gemessen wird, dass die Dauer der ersten oder der zweiten Halbperiode der Resonanzschwingungsperiode des elektromagnetischen Felds des Schwingungskreises verändert wird.

5. Vorrichtung zur Durchflussmessung eines flüssigen Mediums mit einem flüssigen Medium, das in einer Rohrleitung untergebracht wird, mit einem Magneten, einer Induktionsspule und einer Messschaltung,
**dadurch gekennzeichnet,**
**dass** die Vorrichtung einen Schwingungskreis enthält, der eine Induktionsspule des Schwingungskreises und einen Kondensator des Schwingungskreises umfasst,
**dass** das flüssige Medium dabei in der Rohrleitung zwischen Polenden des Magneten sowie zwischen einem ersten und einem zweiten Kondensatorbelag des Schwingungskreises untergebracht ist und
**dass** die Messschaltung eine Induktionsspule zum Nachpumpen von Energie in den Schwingungskreis und eine Induktionsspule zur Ablesung der Frequenz der Resonanzschwingungen des Schwingungskreises aufweist.

6. Vorrichtung nach Anspruch 5,
**dadurch gekennzeichnet,**
**dass** der Schwingungskreis von der Messschaltung galvanisch getrennt ist.

7. Vorrichtung nach Anspruch 5,
**dadurch gekennzeichnet,**
**dass** das flüssige Medium in der Rohrleitung zwischen Polenden eines Dauermagneten untergebracht ist.
